(19) **Europäisches Patentamt**
**European Patent Office**
**Office européen des brevets**

(11) **EP 3 311 604 B1**

(12) # FASCICULE DE BREVET EUROPEEN

(45) Date de publication et mention
de la délivrance du brevet:
**20.03.2019 Bulletin 2019/12**

(21) Numéro de dépôt: **16738370.2**

(22) Date de dépôt: **20.06.2016**

(51) Int Cl.:
***H04W 24/02*** *(2009.01)*　　*H04W 84/18* *(2009.01)*
*H04W 64/00* *(2009.01)*

(86) Numéro de dépôt international:
**PCT/EP2016/064215**

(87) Numéro de publication internationale:
**WO 2016/203050 (22.12.2016 Gazette 2016/51)**

(54) **SYSTÈME D'OPTIMISATION DU DÉPLOIEMENT DE CAPTEURS POUR LA LOCALISATION DE CIBLES, UTILISATION DU SYSTÈME ET PROCÉDÉ D'OPTIMISATION**

SYSTEM ZUR OPTIMIERUNG DES EINSATZES VON SENSOREN ZUR ORTUNG VON ZIELEN, VERWENDUNG DES SYSTEM UND OPTIMIERUNGSVERFAHREN

SYSTEM FOR OPTIMISING THE DEPLOYMENT OF SENSORS FOR LOCATING TARGETS, USE OF THE SYSTEM AND OPTIMISATION METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.06.2015 FR 1555660**

(43) Date de publication de la demande:
**25.04.2018 Bulletin 2018/17**

(73) Titulaire: **Université de Technologie de Troyes
10010 Troyes Cédex (FR)**

(72) Inventeurs:
* **SNOUSSI, Hichem
10800 Saint Julien Les Villas (FR)**
* **REBAI, Maher
10450 Breviandes (FR)**
* **HNAIEN, Faicel
10120 Saint André-les-Vergers (FR)**
* **LE BERRE, Matthieu
53810 Change (FR)**

(74) Mandataire: **Debay, Yves
Cabinet Debay
126, Elysee 2
78170 La Celle Saint Cloud (FR)**

(56) Documents cités:
**WO-A1-2010/119230　　US-A1- 2008 007 720
US-A1- 2013 218 499　　US-B1- 8 265 870**

* LINH VAN NGUYEN ET AL: "Locational optimization based sensor placement for monitoring Gaussian processes modeled spatial phenomena", INDUSTRIAL ELECTRONICS AND APPLICATIONS (ICIEA), 2013 8TH IEEE CONFERENCE ON, IEEE, 19 juin 2013 (2013-06-19), pages 1706-1711, XP032442326, DOI: 10.1109/ICIEA.2013.6566643 ISBN: 978-1-4673-6320-4
* NIRANCHANA S ET AL: "Object monitoring by prediction and localisation of nodes by using Ant Colony Optimization in Sensor Networks", ADVANCED COMPUTING (ICOAC), 2012 FOURTH INTERNATIONAL CONFERENCE ON, IEEE, 13 décembre 2012 (2012-12-13), pages 1-8, XP032315054, DOI: 10.1109/ICOAC.2012.6416828 ISBN: 978-1-4673-5583-4

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**EP 3 311 604 B1**

**Description**

DOMAINE TECHNIQUE DE L'INVENTION

La présente invention se rapporte au domaine du déploiement de capteurs dans au moins une zone. Plus particulièrement, l'invention concerne un procédé d'optimisation du déploiement de capteurs pour permettre la localisation de cibles réparties dans une pluralité de zones.

ARRIERE-PLAN TECHNOLOGIQUE DE L'INVENTION

Il est connu de l'art antérieur des méthodes de déploiement de réseaux de capteurs, dans la mesure où les applications actuelles nécessitent de plus en plus l'intégration de ce type de méthodes.

Il est notamment connu de l'art antérieur les méthodes de localisation par GPS (Global Positioning System) permettant par exemple de se repérer sur les réseaux routiers ou de localiser des individus grâce à la triangulation. Cependant, cette méthode est limitée à une utilisation en extérieur puisque dépendante des communications avec des satellites artificiels.

Il est également connu d'autres méthodes de triangulation, destinées à fonctionner à l'intérieur de bâtiments, ces méthodes utilisent principalement les signaux WiFi déjà présents. Cependant, la couverture par les signaux WiFi est inégale à l'intérieur de bâtiments, et la méthode de triangulation s'avère inefficace lorsqu'un signal instable est utilisé. D'autre part, il est bien connu que de tels signaux présentent une décroissance de la puissance irrégulière à mesure qu'une cible potentielle s'éloigne de la source d'émission, ladite source essayant d'ajuster sa puissance d'émission en fonction de la distance.

Il est également connu des techniques de localisation utilisant les signaux GSM, 3G, 3G+ et/ou 4G. Cependant, ces méthodes présentent l'inconvénient de ne pas pouvoir être utilisées partout, par exemple dans les bâtiments médicaux, à cause des effets sanitaires de l'exposition à ces signaux. D'autre part, ces types de signaux ont également le désavantage de présenter des inégalités de couverture réseau à l'intérieur des bâtiments.

Il est connu dans l'art antérieur de déterminer la localisation d'une cible à partir d'un signal reçu par des capteurs dans au moins une zone de détection de ladite cible, mais cela requière d'optimiser le déploiement des capteurs, c'est-à-dire de prévoir une localisation et un nombre de capteurs adaptés en fonction de la zone couverte ou à couvrir par lesdits capteurs. Un problème dans le domaine du déploiement des capteurs concerne donc l'optimisation du déploiement des capteurs pour permettre la localisation et le suivi de cibles. En effet, on connaît de l'art antérieur la demande de brevet WO 2010/119230 déposée par la demanderesse, décrivant un système et un procédé de localisation d'une cible, utilisant un réseau d'émetteurs/récepteurs ou des capteurs, dont au moins une partie a une localisation géographique connue. Le système comporte des moyens de traitement de données exécutant un algorithme permettant la localisation et le suivi de la cible en déterminant une distribution de probabilité dans une région. Cependant, ce système repose sur un réseau de capteurs déjà déployés mais ne propose pas de solution pour prévoir le déploiement des capteurs.

Il est également connu de l'art antérieur, notamment de la demande de brevet US 2013/0218499, des solutions de conception optimisée d'un système de surveillance d'une zone géographique, reposant sur un procédé itératif, mis en oeuvre par ordinateur. Dans ce type de solution, le système de surveillance comprend une pluralité de capteurs représentés par un vecteur dont chaque composante indique le type, les caractéristiques et la position du capteur dans la zone. Le système utilise une pluralité de contraintes techniques absolues, parmi des contraintes telles que le poids maximal ou le prix maximal ou encore la précision minimum de localisation sur une zone géographique donnée. Le système comprend en outre un algorithme effectuant l'enregistrement de la localisation de la zone et le calcul déterminant le nombre de capteurs et leur positionnement pour obtenir une solution optimale de déploiement de capteurs dans la zone géographique. Cependant, ce type de solution est perfectible, notamment pour réduire le temps de calcul nécessaire et/ou améliorer le déploiement pour un suivi plus précis des cibles détectées. Un déploiement peut en effet répondre aux contraintes de couverture pour la détection de la cible dans la zone géographique considérée, mais il demeure parfois moins optimal pour le suivi de la cible (estimation en temps réel de ses coordonnées géographiques).

DESCRIPTION GENERALE DE L'INVENTION

La présente invention a donc pour objet de proposer une méthode de localisation des cibles permettant de pallier au moins un des inconvénients de l'art antérieur notamment en utilisant un réseau de capteurs déployés dans une zone par cette même méthode. En particulier, l'invention vise à améliorer le déploiement de capteurs suivant une pluralité de contraintes, selon un procédé d'optimisation du déploiement des capteurs.

A cet effet, l'invention concerne un procédé d'optimisation du déploiement d'au moins un capteur dans une zone pour la localisation d'au moins une cible dans ladite zone, tel que défini par la revendication 1.

Selon une autre particularité, le procédé comprend une division de la zone de déploiement en au moins deux sous-zones, les données relatives à la géométrie surfacique de chaque sous-zone étant enregistrées dans un espace mémoire des moyens informatiques, l'algorithme exécuté par les moyens informatiques de traitement étant destiné à localiser au moins une cible, détectée par au moins un capteur, dans une sous-zone.

Selon une autre particularité, l'exécution de l'algorithme d'optimisation par les moyens informatiques de traitement détermine ledit calcul des nombres et positionnements des capteurs en permettant la détermination de la sous-zone dans laquelle une cible, détectée par au moins un capteur déployé, est située.

Selon une autre particularité, la surface de détection de chaque capteur est un disque dont le paramètre représentatif de la valeur du rayon est enregistré dans un espace mémoire des moyens informatiques.

Selon une autre particularité, le fait que toutes les positions ponctuelles de la zone de déploiement se trouvent dans la/les surface(s) de détection du/des capteur(s) à déployer, est assuré par une contrainte de couverture intégrée dans au moins un algorithme d'optimisation satisfaisant la formule mise en oeuvre par l'exécution de l'algorithme par les moyens informatiques de traitement :

$$\frac{1}{|P|} \sum_{i \in P} a_{i,j} \cdot X_i \geq 1, \forall j \in P \,,$$

$$a_{i,j} \text{ et } X_i \in \{0,1\}, \forall i, j \in P \,,$$

P étant un paramètre enregistré dans un espace mémoire des moyens informatiques représentant le nombre de positions ponctuelles potentielles de capteurs résultant de la discrétisation de la zone de déploiement, $a_{i,j}$ étant un coefficient binaire exprimant la couverture de la position j par un hypothétique capteur déployé sur la position i, et $X_i$ étant une variable de décision binaire correspondant à la présence d'un capteur déployé sur la position i, ces deux paramètres indépendants étant enregistrés dans un espace mémoire des moyens informatiques, $a_{i,j}$ et $X_i$ étant égaux à 1 respectivement si la couverture de la position j par un capteur déployé sur la position i est assurée et si un capteur est présent sur la position i, et $a_{i,j}$ et $X_i$ étant égaux à 0 sinon.

Selon une autre particularité, le nombre de capteurs déployés dans la zone de déploiement satisfait la formule mise en oeuvre par l'exécution de l'algorithme par les moyens informatiques de traitement :

$$z_1 = \frac{1}{|P|} \sum_{i \in P} X_i \,,$$

$z_1$ étant un paramètre normalisé calculé par l'algorithme d'optimisation et enregistré dans un espace mémoire des moyens informatiques.

Selon une autre particularité, la valeur représentative d'une contrainte imposée à une variable binaire $Y_{j,k}$ est enregistrée dans un espace mémoire des moyens informatiques, cette variable $Y_{j,k}$ représentant un conflit dans la détection d'une cible, un conflit étant défini par l'impossibilité d'attribuer une position à une cible détectée par au moins un des capteurs parmi deux positions possibles, $Y_{j,k}$ étant égale à 1 si et seulement si il n'existe pas de capteur permettant de distinguer une cible présente sur la position j d'une cible présente sur la position k, $Y_{j,k}$ étant nulle sinon, cette contrainte sur la valeur de $Y_{j,k}$ étant enregistrée dans un espace mémoire des moyens informatiques et doit satisfaire la formule mise en oeuvre par l'exécution de l'algorithme par les moyens informatiques de traitement :

$$\sum_{i \in P} \left( \left| a_{i,j} - a_{i,k} \right| \cdot X_i \right) + Y_{j,k} \geq 1, \forall j, k \in P^2, j \neq k \,,$$

$a_{i,k}$ étant un coefficient binaire exprimant la couverture de la position k par un hypothétique capteur déployé sur la position i, $a_{i,k}$ étant égal à 1 si la couverture de la position k par un capteur déployé sur la position i est assurée, et $a_{i,k}$ étant égal à 0 sinon.

Selon une autre particularité, $Y_{j,k}$ est égale à 1 si et seulement si il n'existe pas de capteur permettant de distinguer une cible présente sur la position j d'une cible présente sur la position k, les positions j et k étant dans des sous-zones différentes, $Y_{j,k}$ étant nulle sinon.

Selon une autre particularité, le nombre de conflits dans la détection d'au moins une cible satisfait la formule mise en oeuvre par l'exécution de l'algorithme par les moyens informatiques de traitement :

$$z_2 = \frac{1}{|P|} \sum_{j \in P} \left[ \frac{1}{\pi \cdot R^2} \sum_{k \in P, k \neq j} Y_{j,k} \right],$$

R étant un paramètre enregistré dans un espace mémoire des moyens informatiques et représentant le rayon de détection d'un capteur, $z_2$ étant un paramètre normalisé calculé par l'algorithme d'optimisation et enregistré dans un espace mémoire des moyens informatiques.

Selon une autre particularité, le calcul pour déterminer le nombre de capteur à déployer et le positionnement de chaque capteur à déployer sur une position ponctuelle de la zone de déploiement est réalisée par minimisation des paramètres $z_1$ et $z_2$, mise en oeuvre par les moyens informatiques de traitement des données exécutant l'algorithme d'optimisation , ledit algorithme réalisant une optimisation linéaire afin d'obtenir un front de Pareto optimal à m points, m étant un entier naturel enregistré dans un espace mémoire des moyens informatiques.

Selon une autre particularité, l'algorithme d'optimisation comprend deux algorithmes d'optimisation destinés à réaliser les calculs de $z_1$ et $z_2$, le premier algorithme étant destiné à calculer les valeurs du paramètre $z_2$, le second algorithme étant destiné à calculer les valeurs du paramètre $z_1$.

Selon une autre particularité, le procédé est mis en oeuvre, pour le calcul pour déterminer le nombre de capteurs à déployer et le positionnement de chaque capteur à déployer sur une position ponctuelle de la zone de déploiement, via l'exécution des algorithmes d'optimisation par les moyens informatiques de traitement, et comprend :

a. le calcul et l'enregistrement des points extrêmes $z_1^{\min}$, $z_2^{\max}$ du front de Pareto, réalisé par les algorithmes d'optimisation satisfaisant les formules :

$$p_{z1} = (z_1^{\min}, z_2^{\max}) \text{ et } p_{z2} = (z_1^{\max}, z_2^{\min}),$$

$z_1^{\min}$ étant calculé en minimisant $z_1$ sans prendre en compte la contrainte liée à la minimisation des conflits dans la détection d'au moins une cible, $z_2^{\min}$ étant calculé en minimisant $z_2$ sans prendre en compte la contrainte liée à la minimisation du nombre de capteurs déployés, $z_2^{\max}$ étant calculé avec la contrainte $\frac{1}{|P|} \sum_{i \in P} X_i \leq z_1^{\min}$,

$z_1^{\max}$ étant calculé avec la contrainte $\frac{1}{|P|} \sum_{j \in P} \left[ \frac{1}{\pi \cdot R^2} \sum_{k \in P, k \neq j} Y_{j,k} \right] \leq z_2^{\min}$ ;

b. le calcul et l'enregistrement des paramètres $z_2^1$ et $z_1^1$, $z_1^1$ étant calculé par le second algorithme en respectant la contrainte $\frac{1}{|P|} \sum_{i \in P} X_i < z_1^{\max}$, $z_2^1$ étant calculé par le premier algorithme en respectant la contrainte $\frac{1}{|P|} \sum_{i \in P} X_i \leq z_1^1$ ;

c. l'itération du calcul et de l'enregistrement de l'ensemble des paramètres du front de Pareto dont les coordonnées sont identifiées selon la formule $p_n = (z_1^n, z_2^n)$, $z_2^n$ étant calculé par le premier algorithme en respectant la contrainte $\frac{1}{|P|} \sum_{i \in P} X_i < z_1^{n-1}$, $z_1^n$ étant calculé par le second algorithme en respectant la contrainte

$$\frac{1}{|P|} \sum_{j \in P} \left[ \frac{1}{\pi \cdot R^2} \sum_{k \in P, k \neq j} Y_{j,k} \right] \leq z_2^n \, ,$$ pour toutes les valeurs de n comprises entre 2 et m, n étant un entier naturel enregistré dans un espace mémoire des moyens informatiques.

Un autre objectif selon l'invention est de proposer un procédé d'optimisation du déploiement d'au moins un capteur dans une zone pour la localisation d'au moins une cible dans ladite zone, le procédé étant mis en oeuvre par des moyens informatiques de traitement des données, exécutant un algorithme d'optimisation compris dans un espace mémoire des moyens informatiques, le procédé comprenant :

a. un enregistrement, dans l'espace mémoire des moyens informatiques, de données numériques relatives à la géométrie surfacique de la zone de déploiement,
b. une discrétisation de la zone de déploiement de capteurs en une pluralité de positions ponctuelles potentielles par un algorithme exécuté par les moyens informatiques de traitement, l'algorithme utilisant au moins un paramètre d'espacement entre les positions enregistrées dans un espace mémoire des moyens informatiques,
c. une division de la zone de déploiement en au moins deux sous-zones via l'exécution de l'algorithme par les moyens informatiques de traitement,
d. un calcul par l'algorithme exécuté par les moyens informatiques de traitement, pour déterminer le nombre de capteurs à déployer et le positionnement de chaque capteur à déployer sur une position ponctuelle de la zone de déploiement,

l'exécution de l'algorithme d'optimisation par les moyens informatiques de traitement déterminant ledit calcul des nombre et positionnement des capteurs en :

- couvrant toutes les positions ponctuelles de la zone de déploiement par la surface/les surfaces de détection du capteur/des capteurs à déployer,

- minimisant la valeur représentative du nombre de capteurs à déployer dans la zone de déploiement d'une part, et le nombre de positions ponctuelles possiblement attribuables à chaque cible destinée à être détectée par au moins un capteur d'autre part,

- permettant la détermination de la sous-zone dans laquelle une cible, détectée par au moins un capteur déployé, est située.

Un autre objectif de l'invention est de proposer un système d'optimisation du déploiement de capteurs qui permette de pallier au moins un inconvénient de l'art antérieur.

Cet autre objectif est atteint par un système d'optimisation du déploiement d'au moins un capteur dans une zone pour la localisation d'au moins une cible dans ladite zone, dans lequel chaque capteur est destiné à détecter de façon binaire toute cible pénétrant dans sa surface de détection, le système étant caractérisé en ce qu'il comprend des moyens informatiques de traitement des données, exécutant au moins un algorithme d'optimisation compris dans un espace mémoire des moyens informatiques, dans lequel l'exécution de l'algorithme permet la mise en oeuvre du procédé d'optimisation selon la présente invention.

Un autre objectif selon l'invention est de proposer une utilisation du système d'optimisation, selon la présente invention, pour positionner au moins un capteur sur une position ponctuelle d'une zone de déploiement discrétisée par un algorithme d'optimisation compris dans les moyens informatiques de traitement des données du système d'optimisation, la zone de déploiement étant divisée en au moins deux sous-zones via l'exécution de l'algorithme par les moyens informatiques de traitement, chaque capteur étant destiné à détecter de façon binaire au moins une cible pénétrant dans sa surface de détection, l'exécution de l'algorithme d'optimisation par les moyens informatiques de traitement déterminant ledit calcul des nombres et positionnements des capteurs, lors du positionnement du/des capteur(s), en :

- couvrant toutes les positions ponctuelles de la zone de déploiement par la surface/les surfaces de détection du capteur/des capteurs à déployer,

- minimisant la valeur représentative du nombre de capteurs à déployer dans la zone de déploiement d'une part, et le nombre de positions (P) ponctuelles possiblement attribuables à chaque cible destinée à être détectée par au moins un capteur d'autre part,

- permettant la détermination de la sous-zone dans laquelle une cible, détectée par au moins un capteur déployé, est située.

Un autre objectif selon l'invention est de proposer un programme d'ordinateur comprenant des instructions de code de programme pour la mise en oeuvre du procédé d'optimisation de déploiement d'au moins un capteur selon une des particularités décrites précédemment, lorsque ce programme est exécuté par les moyens informatiques de traitement.

Un autre objectif selon l'invention est de proposer un support d'enregistrement lisible par des moyens informatiques de traitement, sur lequel est enregistré un programme d'ordinateur exécutable par les moyens informatiques pour la mise en oeuvre du procédé selon une des particularités décrites précédemment.

DESCRIPTION DES FIGURES ILLUSTRATIVES

L'invention, avec ses caractéristiques et avantages, ressortira plus clairement à la lecture de la description faite en référence au dessin annexé dans lequel :

La figure 1a représente une vue de haut d'une zone de déploiement, mettant en évidence la division de la zone en sous-zones,

La figure 1b représente une vue de haut d'une zone de déploiement, mettant en évidence la discrétisation de la zone et la division de la zone en sous-zones,

La figure 2 représente un ensemble de capteurs déployés dans la zone de déploiement,

La figure 3a représente une pluralité de conflits sur la détection d'une cible par au moins un capteur,

La figure 3b représente la détection d'une cible dans une même sous-zone, évitant les situations de conflit,

La figure 4 représente les étapes du procédé d'optimisation.

DESCRIPTION DES MODES DE REALISATION PREFERES DE L'INVENTION

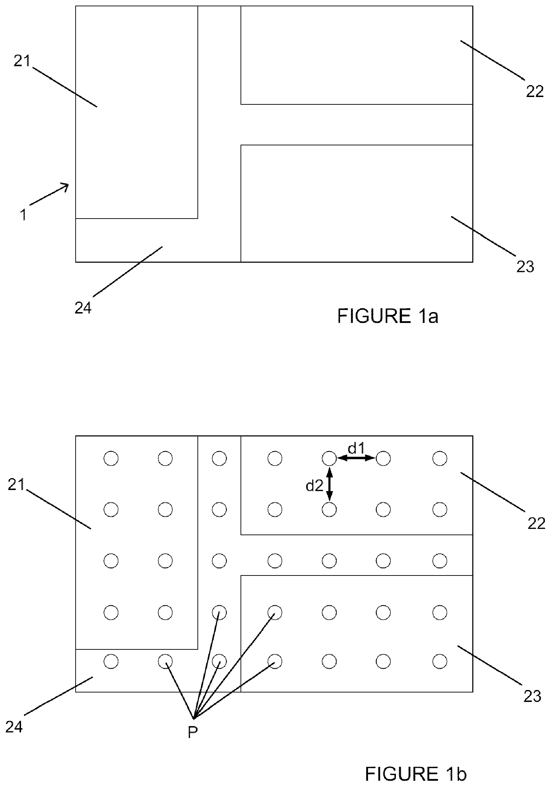

En référence aux figures 1 à 4, l'invention va maintenant être décrite.

La présente demande concerne un procédé d'optimisation du déploiement d'au moins un capteur (31, 32, 33) dans une zone (1) pour la localisation d'au moins une cible dans ladite zone. La présente demande concerne également un système pour la mise en oeuvre d'un tel procédé. Ainsi, les termes procédé et système sont utilisés dans la présente demande pour indiquer que l'invention repose sur l'exécution d'au moins un algorithme dans des moyens de traitement de données tels que des moyens informatiques, sans induire de limitation pour la mise en oeuvre pratique de l'invention. Dans la présente demande, l'optimisation du déploiement permet d'améliorer la détection de cibles, mais également leur localisation au cours du temps, c'est-à-dire le suivi de cibles. Ainsi, dans la présente demande le terme de localisation s'entend comme couvrant également le suivi puisqu'il suffit de réitérer la localisation de la cible.

Dans un mode de réalisation, le procédé d'optimisation du déploiement d'au moins un capteur (31, 32, 33) dans une zone (1) pour la localisation d'au moins une cible dans ladite zone est mis en oeuvre par un système d'optimisation du déploiement d'au moins un capteur (31, 32, 33) dans ladite zone de déploiement (1). Ce système d'optimisation comprend des moyens informatiques de traitement des données. Par exemple et de manière non limitative, un capteur est un dispositif électronique ou optoélectronique capable de détecter, par exemple de façon binaire, toute cible pénétrant dans sa surface de détection (310, 320 ,330). On entend par détection binaire la possibilité pour le capteur (31, 32, 33) d'envoyer aux moyens informatiques une information de détection de la cible si et seulement si la cible se trouve dans le rayon de détection dudit capteur, autrement aucun signal n'est envoyé aux moyens informatiques. Par exemple et de manière non limitative, la surface de détection d'un capteur est un disque de rayon R, dont la valeur est enregistrée dans un espace mémoire des moyens informatiques, la surface de détection d'un capteur étant par conséquent égale à $\pi \cdot R^2$. De cette manière, le problème lié à la décroissance de la puissance irrégulière d'un signal à mesure qu'une cible potentielle s'éloigne de la source d'émission est surmonté. Tout type de capteur apte à détecter de façon binaire toute cible pénétrant dans sa surface de détection (310, 320 ,330) est donc utilisable, mais tout type de capteur capable de détecter et localiser de façon plus précise sera donc également utilisable puisqu'il est tiré avantage du fait de simplement pouvoir utiliser l'information de présence/absence.

Par exemple et de manière non limitative, les moyens informatiques du système d'optimisation comprennent au moins une unité de traitement des données comprenant au moins un processeur de calcul, et au moins un espace mémoire permettant d'enregistrer des données, comme par exemple les ordinateurs, calculateurs ou stations de travail bien connus de l'homme du métier. Le procédé d'optimisation mis en oeuvre par le système selon l'invention comprend plusieurs étapes permettant d'optimiser le déploiement de capteurs pour la localisation de cibles, exécutées par un algorithme d'optimisation compris dans les moyens informatiques, par exemple et de manière non limitative un algorithme multi-objectif. Les étapes du procédé selon divers modes de réalisation vont maintenant être décrites.

Dans certains modes de réalisation, au cours de la première étape du procédé dite étape d'enregistrement de données surfaciques (E1), des données numériques relatives à la géométrie surfacique de la zone de déploiement sont enregistrées dans un espace mémoire des moyens informatiques. Par exemple et de manière non limitative, ces données sont enregistrées par un utilisateur interagissant avec les moyens informatiques du système d'optimisation. Les données de géométrie comprennent par exemple les dimensions totales de la zone (1), comme le périmètre et la longueur de chaque côté de la zone, ainsi que des données relatives à la forme de la zone. Par exemple, cette zone est une simple pièce carrée ou rectangulaire. Dans d'autres exemples, la zone présente une forme plus complexe.

Dans certains modes de réalisation, au cours de la deuxième étape du procédé dite étape de discrétisation (E2), la zone de déploiement est discrétisée par les moyens informatiques exécutant l'algorithme d'optimisation qui, par exemple et de manière non limitative, comprend un programme destiné à discrétiser la zone (1) exécuté par les moyens informatiques. On entend par discrétisation de la zone une division de cette dernière en une pluralité de positions ponctuelles (P) pouvant être occupées potentiellement soit par un capteur, soit par une cible. Par ailleurs, chaque position ne peut accueillir qu'un seul capteur et/ou une seule cible. Dans ces modes de réalisation, cette discrétisation est réalisée selon une grille à deux dimensions enregistrée dans une zone mémoire des moyens informatiques, chaque paramètre de la grille précisant le nombre de positions ponctuelles potentielles selon une direction. Par exemple et de manière non limitative, une grille $x \times y$ permet d'établir une matrice de position avec x positions ponctuelles potentielles par ligne et y positions ponctuelles potentielles (P) par colonne. Dans certains modes de réalisation, une première distance ($d_1$) sépare une cible d'une cible adjacente sur une même ligne, tandis qu'une deuxième distance ($d_2$) sépare une cible d'une cible adjacente sur une même colonne. Dans un mode de réalisation alternatif, la première ($d_1$) et la deuxième ($d_2$) distance sont identiques. Ainsi la distance séparant une position de la position adjacente est identique dans toute la zone discrétisée. De préférence, cette ou ces distance(s), dont la valeur/les valeurs est enregistrée/sont enregistrées dans un espace mémoire des moyens informatiques, est paramétrable/sont paramétrables par exemple par un utilisateur. Les positions ponctuelles potentielles seront d'autant plus nombreuses que la valeur de la distance est faible. Plus la densité de positions potentielles ponctuelles (P) est grande, meilleure est la précision de la localisation des cibles au final, mais plus les ressources et temps nécessaires à ces calculs sont grands, car notamment le nombre de positions ponctuelles possiblement attribuables augmente avec la densité de positions potentielles ponctuelles (P). La surface existant entre les positions ne peuvent être occupées ni par un capteur à déployer, ni par une cible à détecter.

Dans certains modes de réalisation, au cours de la troisième étape dite étape de positionnement (E3), les moyens informatiques exécutant l'algorithme d'optimisation, calculent pour déterminer le nombre optimal de capteurs (31, 32, 33) à déployer, et pour optimiser le positionnement desdits capteurs dans la zone de déploiement (1). Pour se faire, l'algorithme d'optimisation intègre une pluralité de contraintes devant être prises en compte pour le calcul du nombre de capteurs à déployer ainsi que pour la position à attribuer à chacun des capteurs.

Dans des modes de réalisation, une première contrainte intégrée dans au moins un algorithme d'optimisation est une contrainte de couverture. En effet, l'exécution de l'algorithme d'optimisation par les moyens informatiques du système d'optimisation permettent de vérifier que toutes les positions ponctuelles (P) de la zone de déploiement (1) se trouvent dans la/les surfaces(s) de détection du/des capteur(s) à déployer. En d'autres termes, cette contrainte impose que toutes les positions de la zone de déploiement doivent être couvertes par la surface/les surfaces de détection du capteur/des capteurs destiné/destinés à être déployés dans la zone de déploiement (1). Dans certains modes de réalisation, cette contrainte satisfait la formule suivante, mise en oeuvre par l'exécution de l'algorithme d'optimisation par les moyens informatiques de traitement :

$$\frac{1}{|P|} \sum_{i \in P} a_{i,j} \cdot X_i \geq 1, \forall j \in P \,,$$

avec $a_{i,j}$ et $X_i \in \{0,1\}$, $\forall i, j \in P$. Dans certains modes de réalisation, P est un paramètre enregistré dans un espace mémoire des moyens informatiques qui représente le nombre de positions ponctuelles potentielles de capteurs résultant de la discrétisation de la zone de déploiement. $a_{i,j}$ est quant à lui un coefficient binaire exprimant la couverture de la position j par un hypothétique capteur déployé sur la position i. En d'autres termes, ce coefficient est égal à 1 si la couverture de la position j par un capteur déployé sur la position i est assurée. Dans le cas contraire, $a_{i,j}$ est égal à 0. $X_i$ est une variable de décision binaire, qui correspond à la présence d'un capteur déployé sur la position i. En d'autres termes, cette variable est égale à 1 si un capteur est présent sur la position i. Dans le cas contraire, $X_i$ est égal à 0. Ces deux paramètres $a_{i,j}$ et $X_i$ sont indépendants et sont de préférence enregistrés dans un espace mémoire des moyens informatiques.

Dans certains modes de réalisation, le nombre total de capteurs déployés dans la zone de déploiement satisfait la formule $Z_1 = \sum\limits_{i \in P} X_i$ , mise en oeuvre par l'exécution de l'algorithme d'optimisation par les moyens informatiques de traitement. La valeur de ce paramètre $Z_1$ est calculée par l'algorithme d'optimisation et enregistrée dans un espace mémoire des moyens informatiques.

Dans certains modes de réalisation, une deuxième contrainte intégrée dans au moins un algorithme d'optimisation est une contrainte visant à minimiser le nombre de capteurs (31, 32, 33) à déployer dans la zone (1). Mathématiquement, cela revient donc à minimiser la valeur du paramètre $Z_1$. Dans un mode de réalisation, afin de travailler sur des paramètres normalisés, c'est-à-dire dont la valeur est comprise entre 0 et 1, la contrainte visant à minimiser le nombre de capteurs à déployer dans la zone de déploiement (1) revient à minimiser un paramètre $z_1$, satisfaisant la formule $z_1 = \left(1/|P|\right) \cdot \sum\limits_{i \in P} X_i$ , mise en oeuvre par l'exécution de l'algorithme d'optimisation par les moyens informatiques de traitement.

Dans des modes de réalisation, l'algorithme d'optimisation intègre une troisième contrainte devant également être prise en considération pour le calcul du nombre de capteurs à déployer et pour le positionnement desdits capteurs : il s'agit d'une contrainte visant à minimiser le nombre de positions possiblement attribuables à chaque cible détectable par au moins un capteur. En d'autre terme, cette troisième contrainte vise à minimiser le nombre de conflits dans la détection d'au moins une cible. Un conflit est défini par l'impossibilité d'attribuer une position à une cible détectée par au moins un des capteurs déployés dans la zone (1), parmi deux positions possibles. Dans certains modes de réalisation, un tel conflit est formalisé mathématiquement par une variable binaire $Y_{j,k}$, enregistrée dans un espace mémoire des moyens informatiques et calculée par au moins un algorithme d'optimisation . La valeur de $Y_{j,k}$ est égale à 1 si et seulement si il n'existe pas de capteur (31, 32, 33) permettant de distinguer une cible présente sur la position j d'une cible présente sur la position k, la valeur de $Y_{j,k}$ étant nulle sinon. Les valeurs représentatives de la variable $Y_{j,k}$ sont enregistrées dans un espace mémoire des moyens informatiques et satisfont la formule

$$\sum\limits_{i \in P} \left(\left|a_{i,j} - a_{i,k}\right| \cdot X_i\right) + Y_{j,k} \geq 1, \ \forall j,k \in P^2, j \neq k,$$ mise en oeuvre par l'exécution de l'algorithme d'optimisation par les moyens informatiques de traitement. $a_{i,k}$ est un coefficient binaire, enregistré dans un espace mémoire des moyens informatiques, exprimant la couverture de la position k par un hypothétique capteur déployé sur la position i, $a_{i,k}$ étant égal à 1 si la couverture de la position k par un capteur déployé sur la position i est assurée, et égal à 0 sinon.

Dans certains modes de réalisation, le nombre total de conflits dans la détection d'au moins une cible satisfait la formule $Z_2 = \sum\limits_{j \in P} \sum\limits_{k \in P, k \neq j} Y_{j,k}$ , mise en oeuvre par l'exécution de l'algorithme d'optimisation par les moyens informatiques de traitement. La valeur de ce paramètre $Z_2$ est calculée par l'algorithme d'optimisation et enregistrée dans un espace mémoire des moyens informatiques.

Dans certains modes de réalisation, la troisième contrainte revient mathématiquement à minimiser la valeur du paramètre $Z_2$. Dans un mode de réalisation, afin de travailler sur des paramètres normalisés, la contrainte visant à minimiser le nombre de capteurs à déployer dans la zone de déploiement revient à minimiser un paramètre $z_2$, satisfaisant la formule $z_2 = \left(1/|P|\right) \cdot \sum\limits_{j \in P} \left[\left(1/\pi \cdot R^2\right) \cdot \sum\limits_{k \in P, k \neq j} Y_{j,k}\right]$ mise en oeuvre par l'exécution de l'algorithme d'optimisation par les moyens informatiques de traitement, R étant un paramètre enregistré dans un espace mémoire des moyens informatiques et représentant le rayon de détection d'un capteur (31, 32, 33). Par exemple, ce rayon est paramétrable par exemple par un utilisateur via les moyens informatiques sur une interface homme/machine, ou bien le rayon est défini par la sélection, via les moyens informatiques, du type de capteur à déployer.

Dans un mode de réalisation, les moyens informatiques exécutent un algorithme d'optimisation, cet algorithme comprenant lui-même au moins deux algorithmes d'optimisation (M1, M2), un premier algorithme (M1) étant destiné à calculer les valeurs du paramètre $z_1$, tandis qu'un deuxième algorithme (M2) est destiné à calculer les valeurs du paramètre $z_2$. Dans un mode de réalisation, ces deux algorithmes (M1, M2) sont différents. Dans un mode de réalisation alternatif, ces deux algorithmes (M1, M2) sont identiques.

Dans certains modes de réalisation et de manière préférentielle, la minimisation des paramètres $z_1$ et $z_2$ est réalisé par les moyens informatiques exécutant deux algorithmes d'optimisation (M1, M2), selon une optimisation linéaire permettant d'obtenir un front de Pareto optimal à m points, m étant un entier naturel enregistré dans un espace mémoire des moyens informatiques. Par exemple, la valeur de m est paramétrable par exemple par un utilisateur via les moyens informatiques sur une interface homme/machine, ou bien la valeur de m est définie par la sélection, via les moyens informatiques, du type de capteur à déployer. Pour rappel, un front de Pareto est un ensemble de solutions à un problème par exemple multi-objectif, parmi lesquelles on ne peut décider si une solution est meilleure qu'une autre, aucune n'étant systématiquement inférieure aux autres sur tous les objectifs à résoudre.

Les étapes du calcul du front de Pareto relatif à la minimisation commune des paramètres $z_1$ et $z_2$ va maintenant être décrit, selon un mode de réalisation. Ce calcul est réalisé par les moyens informatiques exécutant l'algorithme comprenant les deux algorithmes d'optimisation (M1, M2).

Dans certains modes de réalisation, au cours d'une première étape, dite étape de calcul des points extrêmes (E31), les algorithmes d'optimisation (M1, M2) calculent les points extrêmes du front de Pareto, satisfaisant les formules

$$p_{z1} = \left(z_1^{\min}, z_2^{\max}\right) \text{ et } p_{z2} = \left(z_1^{\max}, z_2^{\min}\right)$$ mises en oeuvre par l'exécution des algorithmes d'optimisation (M1, M2) par les moyens informatiques de traitement. Les valeurs de ces paramètres sont enregistrées dans une zone mémoire des moyens informatiques. La valeur de $z_1^{\min}$ est calculée par le second algorithme d'optimisation (M2) en minimisant $z_1$ sans prendre en compte la contrainte liée à la minimisation des conflits dans la détection d'au moins une cible. La valeur de $z_2^{\min}$ est calculée par le premier algorithme d'optimisation (M1) en minimisant $z_2$ sans prendre en compte la contrainte liée à la minimisation du nombre de capteurs déployés. Ensuite, la valeur de $z_2^{\max}$ est calculée avec la contrainte $\left(1/|P|\right) \cdot \sum_{i \in P} X_i \leq z_1^{\min}$ par le premier algorithme (M1), et la valeur de $z_1^{\max}$ est calculé avec la contrainte $\left(1/P\right) \cdot \sum_{j \in P} \left[\left(1/\pi \cdot R^2\right) \cdot \sum_{k \in P, k \neq j} Y_{j,k}\right] \leq z_2^{\min}$ par le deuxième algorithme (M2). Ces paramètres sont enregistrés dans une zone mémoire des moyens informatiques.

Dans certains modes de réalisation, au cours d'une deuxième étape, dite étape de calcul des deux points suivants (E32), les algorithmes d'optimisation (M1, M2) calculent les valeurs des paramètres $z_2^1$ et $z_1^1$ du front de Pareto, ces paramètres étant respectivement calculés par le premier et le second algorithme d'optimisation. $z_2^1$ est calculé par le premier algorithme (M1) en respectant la contrainte $\left(1/|P|\right) \cdot \sum_{i \in P} X_i \leq z_1^1$, et $z_1^1$ est calculé par le deuxième algorithme (M2) en respectant la contrainte $\left(1/|P|\right) \cdot \sum_{j \in P} \left[\left(1/\pi \cdot R^2\right) \cdot \sum_{k \in P, k \neq j} Y_{j,k}\right] \leq z_2^1$. Ces paramètres sont enregistrés dans une zone mémoire des moyens informatiques.

Dans certains modes de réalisation, au cours d'une troisième étape, dite étape d'itération (E33), les moyens informatiques répètent l'étape précédente de manière à calculer et enregistrer dans un espace mémoire des moyens informatiques, l'ensemble des points du front de Pareto dont les coordonnées sont identifiées selon la formule $p_n = \left(z_1^n, z_2^n\right)$, les valeurs de $z_2^n$ étant calculées par le premier algorithme (M1) en respectant la contrainte $\left(1/|P|\right) \cdot \sum_{i \in P} X_i < z_1^{n-1}$, les valeurs de $z_1^n$ étant calculées par le deuxième algorithme (M2) en respectant la contrainte $\left(1/|P|\right) \cdot \sum_{j \in P} \left[\left(1/\pi \cdot R^2\right) \cdot \sum_{k \in P, k \neq j} Y_{j,k}\right] \leq z_2^n$. Ce calcul itératif des valeurs de $z_1^n$ et $z_2^n$ est réalisé par les algorithmes (M1, M2) exécutés par les moyens informatiques de traitement du système d'optimisation, et ce pour toutes les valeurs de n comprises entre 2 et m, n étant un entier naturel enregistré dans un espace mémoire des moyens informatiques.

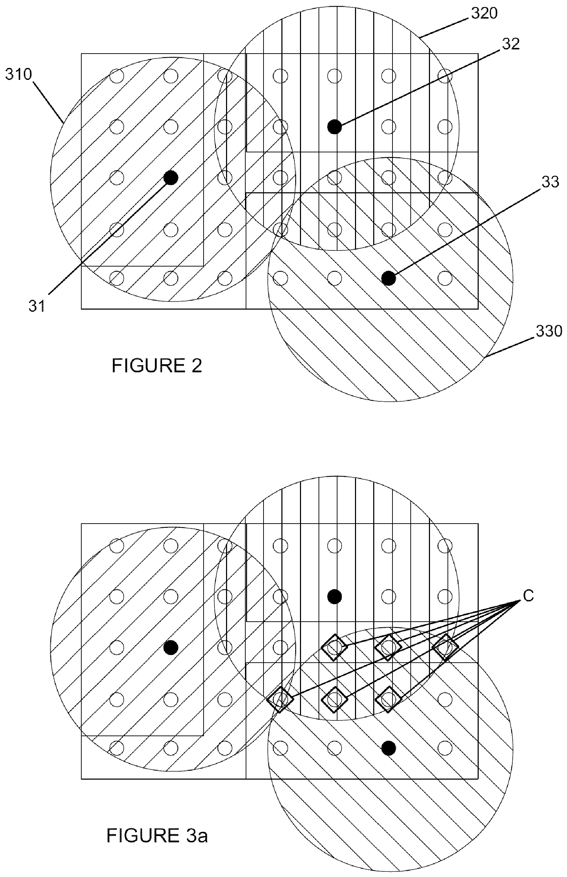

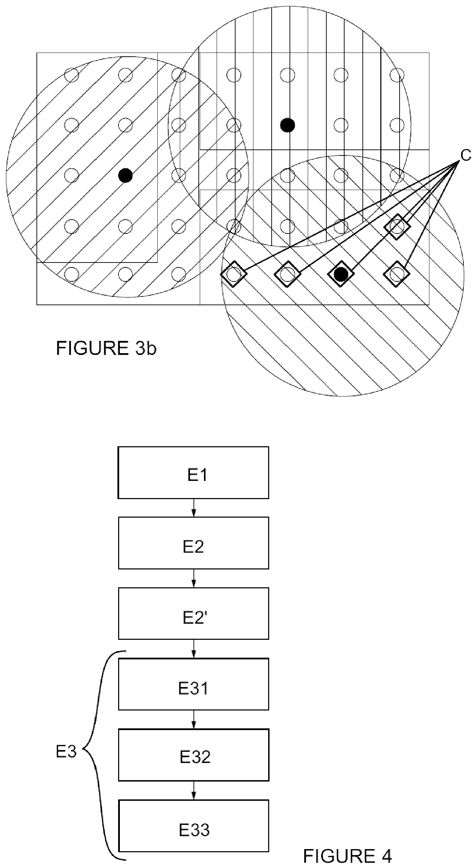

Comme il a été précisé plus haut dans la description, la précision de la localisation des cibles dépend largement de la puissance des moyens informatiques et/ou du temps accordé auxdits moyens informatiques pour réaliser les calculs lors de la mise en oeuvre du procédé d'optimisation. Il est donc utile, la plupart du temps, non pas d'obtenir avec une très grande précision la position d'une cible détectée par au moins un capteur, mais plutôt de découvrir, par la mise en oeuvre par le système du procédé selon l'invention, la présence ou non d'une cible dans une surface déterminée. Dans cette optique, et dans un mode de réalisation, les donnés de géométrie surfacique de la zone de déploiement (1) comprennent donc des informations supplémentaires, comme par exemple des subdivisions de la zone en sous-zones (21, 22, 23, 24), les données relatives à la géométrie surfacique de chaque sous-zone, comme le périmètre, la forme de la surface ou la longueur de chaque côté de chaque sous-zone, étant enregistrées dans un espace mémoire des moyens informatiques. Ainsi, l'utilisateur peut se satisfaire de la localisation d'une cible à l'intérieur d'une sous-zone déterminée, offrant alors un bon compromis entre précision de localisation et temps d'exécution des algorithmes d'optimisation (M1, M2). Par exemple et de manière non limitative et au titre d'illustration concrète, un étage d'un bâtiment dans lequel des capteurs sont destinés à être déployés est représenté par une zone, tandis que chaque pièce et chaque couloir est représenté par une sous-zone. Par exemple, selon la figure 3a, une partie des cibles détectées dans deux sous-zones (23, 24) sont détectées par deux capteurs (32, 33) à la fois. Cette situation illustre parfaitement un conflit empêchant de localiser ces cibles dans une sous-zone précise. En revanche, selon la figure 3b, les cibles détectées uniquement par le troisième capteur (33) permettent de localiser ces cibles dans une sous-zone précise (23). Dans ce mode de réalisation, la valeur de la variable binaire $Y_{j,k}$, enregistrée dans un espace mémoire des moyens informatiques et calculée par au moins un algorithme d'optimisation, est égale à 1 si et seulement si il n'existe pas de capteur (31, 32, 33) permettant de distinguer une cible présente sur la position j d'une cible présente sur la position k et si les positions j et k se situent dans des sous-zones (21, 22, 23, 24) différentes, la valeur de $Y_{j,k}$ étant nulle sinon. Dans ce mode de réalisation, une variable $e_i$, dont la valeur enregistrée dans une zone mémoire des moyens informatiques, est associé à chaque sous-zone. Les moyens informatiques comparent la variable $e_j$ de la sous-zone dans laquelle se trouve une cible présente sur la position j, et la variable $e_k$ de la sous-zone dans laquelle se trouve une cible présente sur la position k. Si les valeurs des variables $e_j$ et $e_k$ sont identiques, alors il y a conflit et la valeur de $Y_{j,k}$ enregistrée dans un espace mémoire des moyens informatiques et calculée par au moins un algorithme d'optimisation est égale à 1.

Ainsi, dans un mode de réalisation, l'algorithme d'optimisation, pour déterminer le calcul des nombre(s) et positionnement(s) des capteurs, en plus de couvrir toutes les positions ponctuelles de la zone de déploiement (1) et de minimiser la valeur représentative du nombre de capteurs à déployer dans la zone ainsi que le nombre de positions (P) ponctuelles possiblement attribuables à chaque cible (C) destinée à être détectée, permet la détermination de la sous-zone (21, 22, 23, 24) dans laquelle une cible (C), détectée par au moins un capteur, est située. Ceci permet d'arrêter la recherche de cibles une fois que le capteur a précisément détecté la sous-zone dans laquelle ladite cible (C) se trouve, et donc d'alléger les temps de calcul et la puissance informatique nécessaire à un tel calcul.

Dans ce mode de réalisation, le procédé d'optimisation du déploiement comprend donc une étape supplémentaire (E2') entre l'étape de discrétisation (E2) et l'étape de positionnement (E3), au cours de laquelle la zone de déploiement (1) est divisée en au moins deux sous-zones (21, 22, 23, 24) par les moyens informatiques exécutant l'algorithme d'optimisation qui, par exemple et de manière non limitative, comprend un programme exécuté par les moyens informatiques et qui est destiné à diviser la zone (1) de déploiement en sous-zones.

Dans certains modes de réalisation, le procédé d'optimisation du déploiement d'au moins un capteur (31, 32, 33) dans une zone (1) pour la localisation d'au moins une cible dans ladite zone, le procédé étant mis en oeuvre par des moyens informatiques de traitement des données, exécutant un algorithme d'optimisation compris dans un espace mémoire des moyens informatiques, le procédé comprenant :

a. une étape d'enregistrement, dans l'espace mémoire des moyens informatiques, de données numériques relatives à la géométrie surfacique de la zone de déploiement,

b. une étape de discrétisation de la zone de déploiement de capteurs (31, 32, 33) en une pluralité de positions ponctuelles potentielles (P) par un algorithme exécuté par les moyens informatiques de traitement, l'algorithme utilisant au moins un paramètre d'espacement ($d_1$, $d_2$) entre les positions enregistrées dans un espace mémoire des moyens informatiques,

c. une étape de division de la zone de déploiement (1) en au moins deux sous-zones (21, 22, 23, 24) via l'exécution de l'algorithme par les moyens informatiques de traitement,

d. une étape de calcul par l'algorithme exécuté par les moyens informatiques de traitement, pour déterminer le nombre de capteurs (31, 32, 33) à déployer et le positionnement de chaque capteur à déployer sur une position (P) ponctuelle de la zone de déploiement (1),

l'exécution de l'algorithme d'optimisation par les moyens informatiques de traitement déterminant ledit calcul des nombre et positionnement des capteurs en :

- couvrant toutes les positions ponctuelles de la zone de déploiement par la surface/les surfaces de détection du capteur/des capteurs à déployer,

- minimisant la valeur représentative du nombre de capteurs à déployer dans la zone de déploiement d'une part, et le nombre de positions (P) ponctuelles possiblement attribuables à chaque cible destinée à être détectée par au moins un capteur d'autre part,

- permettant la détermination de la sous-zone (21, 22, 23, 24) dans laquelle une cible (C), détectée par au moins un capteur déployé, est située.

La présente invention concerne donc également une utilisation d'un système pour la mise en oeuvre d'un procédé selon l'un des modes de réalisation décrits dans la présente demande, y compris le dernier mode de réalisation détaillé ci-dessus. D'autre part, la présente demande concerne également un programme d'ordinateur comprenant des instructions de code de programme pour la mise en oeuvre du procédé d'optimisation de déploiement d'au moins un capteur, selon l'un des modes de réalisation décrit précédemment, lorsque ce programme est exécuté par les moyens informatiques de traitement.

Dans certains modes de réalisation, le programme d'ordinateur peut être exécuté par des moyens informatiques, par exemple et de manière non limitative, un ordinateur, un téléphone mobile, une tablette ou tout type de machine informatique ou électronique similaire pouvant exécuter des traitements de l'information.

La présente invention concerne également un support d'enregistrement lisible par des moyens informatiques et stockant le programme d'ordinateur selon un des modes de réalisation décrit précédemment. Dans certains modes de réalisation, le programme d'ordinateur stocké dans le support d'enregistrement est exécuté par des moyens informatiques de traitement pour la mise en oeuvre du procédé d'optimisation selon un des modes de réalisation décrit précédemment.

La présente demande décrit diverses caractéristiques techniques et avantages en référence aux figures et/ou à divers modes de réalisation. L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles. De plus, les caractéristiques techniques décrites dans un mode de réalisation donné peuvent être isolées des autres caractéristiques de ce mode à moins que l'inverse ne soit explicitement mentionné.

Il doit être évident pour les personnes versées dans l'art que la présente invention permet des modes de réalisation sous de nombreuses autres formes spécifiques sans l'éloigner du domaine défini par la portée des revendications jointes, et l'invention ne doit pas être limitée aux détails donnés ci-dessus, mais simplement par les revendications.

**Revendications**

1. Procédé d'optimisation du déploiement de capteurs (31, 32, 33) dans une zone (1) pour la localisation d'au moins une cible dans ladite zone, chaque capteur étant destiné à détecter, de façon binaire, la présence ou l'absence de toute cible pénétrant dans sa surface de détection (310, 320 ,330), le procédé étant mis en oeuvre dans un système comprenant des moyens informatiques de traitement des données, exécutant au moins un algorithme d'optimisation compris dans un espace mémoire des moyens informatiques, le procédé, utilisant un algorithme d'optimisation à plusieurs objectifs, est **caractérisé en ce qu'**il comprend :

   a. l'enregistrement, dans l'espace mémoire des moyens informatiques, de données numériques relatives à la géométrie surfacique de la zone de déploiement,
   b. la discrétisation de la zone de déploiement de capteurs (31, 32, 33) en une pluralité de positions ponctuelles potentielles (P), par un algorithme exécuté par les moyens informatiques de traitement, l'algorithme utilisant au moins un paramètre d'espacement ($d_1$, $d_2$) entre les positions ponctuelles (P) dans un espace mémoire des moyens informatiques,
   c. le calcul, par l'algorithme exécuté par les moyens informatiques de traitement, pour déterminer le nombre de capteurs (31, 32, 33) à déployer et le positionnement de chaque capteur à déployer sur une position (P) ponctuelle de la zone de déploiement (1),

   ledit algorithme d'optimisation déterminant les nombre et positionnement des capteurs à déployer, en réalisant des itérations successives de l'algorithme d'optimisation utilisant :

• au moins une contrainte imposant de couvrir toutes les positions ponctuelles de la zone de déploiement par la surface/les surfaces de détection du capteur/des capteurs à déployer,
• des objectifs d'optimisation requérant de minimiser :

- d'une part, la valeur représentative du nombre de capteurs à déployer dans la zone de déploiement, et
- d'autre part, le nombre de positions (P) ponctuelles possiblement attribuables à chaque cible destinée à être détectée par au moins un capteur.

2. Procédé d'optimisation selon la revendication précédente, **caractérisé en ce que** le procédé comprend une division de la zone de déploiement (1) en au moins deux sous-zones (21, 22, 23, 24), les données relatives à la géométrie surfacique de chaque sous-zone étant enregistrées dans un espace mémoire des moyens informatiques, l'algorithme exécuté par les moyens informatiques de traitement étant destiné à localiser au moins une cible (C), détectée par au moins un capteur, dans une sous-zone.

3. Procédé d'optimisation selon la revendication 2, **caractérisé en ce que** l'exécution de l'algorithme d'optimisation par les moyens informatiques de traitement détermine ledit calcul des nombre(s) et positionnement(s) des capteurs en permettant la détermination de la sous-zone (21, 22, 23, 24) dans laquelle une cible (C), détectée par au moins un capteur déployé, est située.

4. Procédé d'optimisation selon l'une quelconque des revendications précédentes, **caractérisé en ce que** la surface (310, 320, 330) de détection de chaque capteur (31, 32, 33) est un disque dont le paramètre représentatif de la valeur du rayon est enregistré dans un espace mémoire des moyens informatiques.

5. Procédé d'optimisation selon l'une quelconque des revendications précédentes, **caractérisé en ce que** le fait que toutes les positions (P) ponctuelles de la zone de déploiement se trouvent dans la/les surface(s) de détection du/des capteur(s) à déployer, est assuré par une contrainte de couverture intégrée dans au moins un algorithme d'optimisation satisfaisant la formule mise en oeuvre par l'exécution de l'algorithme par les moyens informatiques de traitement :

$$\frac{1}{|P|}\sum_{i\in P} a_{i,j} \cdot X_i \geq 1, \forall j \in P ,$$

$$a_{i,j} \text{ et } X_i \in \{0,1\}, \forall i, j \in P ,$$

P étant un paramètre enregistré dans un espace mémoire des moyens informatiques représentant le nombre de positions ponctuelles potentielles de capteurs résultant de la discrétisation de la zone de déploiement, $a_{i,j}$ étant un coefficient binaire exprimant la couverture de la position j par un hypothétique capteur (31, 32, 33) déployé sur la position i, et $X_i$ étant une variable de décision binaire correspondant à la présence d'un capteur déployé sur la position i, ces deux paramètres indépendants étant enregistrés dans un espace mémoire des moyens informatiques, $a_{i,j}$ et $X_i$ étant égaux à 1 respectivement si la couverture de la position j par un capteur déployé sur la position i est assurée et si un capteur est présent sur la position i, et $a_{i,j}$ et $X_i$ étant égaux à 0 sinon.

6. Procédé d'optimisation selon l'une quelconque des revendications précédentes, **caractérisé en ce que** le nombre de capteurs déployés dans la zone de déploiement satisfait la formule mise en oeuvre par l'exécution de l'algorithme par les moyens informatiques de traitement :

$$z_1 = \frac{1}{|P|}\sum_{i\in P} X_i ,$$

$z_1$ étant un paramètre normalisé calculé par l'algorithme d'optimisation et enregistré dans un espace mémoire des moyens informatiques.

**7.** Procédé d'optimisation selon l'une quelconque des revendications précédentes, **caractérisé en ce que** la valeur représentative d'une contrainte imposée à une variable binaire $Y_{j,k}$ est enregistrée dans un espace mémoire des moyens informatiques, cette variable $Y_{j,k}$ représentant un conflit dans la détection d'une cible, un conflit étant défini par l'impossibilité d'attribuer une position à une cible détectée (C) par au moins un des capteurs parmi deux positions possibles, $Y_{j,k}$ étant égale à 1 si et seulement si il n'existe pas de capteur permettant de distinguer une cible présente sur la position j d'une cible présente sur la position k, $Y_{j,k}$ étant nulle sinon, cette contrainte sur la valeur de $Y_{j,k}$ étant enregistrée dans un espace mémoire des moyens informatiques et doit satisfaire la formule mise en oeuvre par l'exécution de l'algorithme par les moyens informatiques de traitement :

$$\sum_{i \in P} \left( \left| a_{i,j} - a_{i,k} \right| \cdot X_i \right) + Y_{j,k} \geq 1, \forall j,k \in P^2, j \neq k ,$$

$a_{i,k}$ étant un coefficient binaire exprimant la couverture de la position k par un hypothétique capteur déployé sur la position i, $a_{i,k}$ étant égal à 1 si la couverture de la position k par un capteur déployé sur la position i est assurée, et $a_{i,k}$ étant égal à 0 sinon.

**8.** Procédé d'optimisation selon la revendication 7, **caractérisé en ce que** $Y_{j,k}$ est égale à 1 si et seulement si il n'existe pas de capteur permettant de distinguer une cible présente sur la position j d'une cible présente sur la position k, les positions j et k étant dans des sous-zones (21, 22, 23, 24) différentes, $Y_{j,k}$ étant nulle sinon.

**9.** Procédé d'optimisation selon l'une quelconque des revendications précédentes, **caractérisé en ce que** le nombre de conflits dans la détection d'au moins une cible satisfait la formule mise en oeuvre par l'exécution de l'algorithme par les moyens informatiques de traitement :

$$z_2 = \frac{1}{|P|} \sum_{j \in P} \left[ \frac{1}{\pi \cdot R^2} \sum_{k \in P, k \neq j} Y_{j,k} \right],$$

R étant un paramètre enregistré dans un espace mémoire des moyens informatiques et représentant le rayon de détection (310, 320, 330) d'un capteur (31, 32, 33), $z_2$ étant un paramètre normalisé calculé par l'algorithme d'optimisation et enregistré dans un espace mémoire des moyens informatiques.

**10.** Procédé d'optimisation selon les revendications 6 et 9, **caractérisé en ce que** le calcul pour déterminer le nombre de capteur à déployer et le positionnement de chaque capteur à déployer sur une position ponctuelle (P) de la zone de déploiement est réalisée par minimisation des paramètres $z_1$ et $z_2$, mise en oeuvre par les moyens informatiques de traitement des données exécutant l'algorithme d'optimisation, ledit algorithme réalisant une optimisation linéaire afin d'obtenir un front de Pareto optimal à m points, m étant un entier naturel enregistré dans un espace mémoire des moyens informatiques.

**11.** Procédé d'optimisation selon les revendications 6 et 9, **caractérisé en ce que** l'algorithme d'optimisation comprend deux algorithmes d'optimisation (M1, M2) destinés à réaliser les calculs de $z_1$ et $z_2$, le premier algorithme (M1) étant destiné à calculer les valeurs du paramètre $z_2$, le second algorithme (M2) étant destiné à calculer les valeurs du paramètre $z_1$.

**12.** Procédé d'optimisation selon les revendications 6 et 9, ou selon l'unes des revendications 10 et 11 **caractérisé en ce que** ledit procédé est mis en oeuvre, pour le calcul pour déterminer le nombre de capteurs à déployer et le positionnement de chaque capteur à déployer sur une position ponctuelle (P) de la zone de déploiement (1), via l'exécution des algorithmes d'optimisation (M1, M2) par les moyens informatiques de traitement, et comprend :

a. le calcul et l'enregistrement des points extrêmes ( $z_1^{\min}$ , $z_2^{\max}$ du front de Pareto, réalisé par les algorithmes d'optimisation satisfaisant les formules :

$$p_{z1} = (z_1^{\min}, z_2^{\max}) \text{ et } p_{z2} = (z_1^{\max}, z_2^{\min}),$$

$z_1^{\min}$ étant calculé en minimisant $z_1$ sans prendre en compte la contrainte liée à la minimisation des conflits dans la détection d'au moins une cible, $z_2^{\min}$ étant calculé en minimisant $z_2$ sans prendre en compte la contrainte liée à la minimisation du nombre de capteurs déployés, $z_2^{\max}$ étant calculé avec la contrainte

$$\frac{1}{|P|}\sum_{i \in P} X_i \leq z_1^{\min}, \quad z_1^{\max} \text{ étant calculé avec la contrainte } \frac{1}{|P|}\sum_{j \in P}\left[\frac{1}{\pi \cdot R^2}\sum_{k \in P, k \neq j} Y_{j,k}\right] \leq z_2^{\min};$$

b. le calcul et l'enregistrement des paramètres $z_2^1$ et $z_1^1$, $z_1^1$ étant calculé par le second algorithme (M2) en respectant la contrainte $\dfrac{1}{|P|}\sum_{i \in P} X_i < z_1^{\max}$, $z_2^1$ étant calculé par le premier algorithme (M1) en res-

pectant la contrainte $\dfrac{1}{|P|}\sum_{i \in P} X_i \leq z_1^1$;

c. l'itération du calcul et de l'enregistrement de l'ensemble des paramètres du front de Pareto dont les coordonnées sont identifiées selon la formule $p_n = (z_1^n, z_2^n)$, $z_2^n$ étant calculé par le premier algorithme (M1) en respectant la contrainte $\dfrac{1}{|P|}\sum_{i \in P} X_i < z_1^{n-1}$, $z_1^n$ étant calculé par le second algorithme (M2) en respectant

la contrainte $\dfrac{1}{|P|}\sum_{j \in P}\left[\dfrac{1}{\pi \cdot R^2}\sum_{k \in P, k \neq j} Y_{j,k}\right] \leq z_2^n$, pour toutes les valeurs de n comprises entre 2 et m, n étant un entier naturel enregistré dans un espace mémoire des moyens informatiques.

**13.** Système d'optimisation du déploiement de capteurs (31, 32, 33) dans une zone (1) pour la localisation d'au moins une cible dans ladite zone, dans lequel chaque capteur est destiné à détecter de façon binaire toute cible pénétrant dans sa surface de détection (310, 320 ,330), le système étant **caractérisé en ce qu'**il comprend des moyens informatiques de traitement de données comprenant un espace mémoire dans lequel sont enregistrés des données, ces moyens informatiques étant adaptés pour utiliser lesdites données pour exécuter au moins un algorithme d'optimisation à plusieurs objectifs et défini par la mise en oeuvre du procédé d'optimisation selon l'une des revendications 1 à 12.

**14.** Utilisation d'un système d'optimisation selon la revendication 13 pour la mise en oeuvre du procédé selon l'une des revendications 1 à 12.

**15.** Programme d'ordinateur **caractérisé en ce qu'**il comprend des instructions de code de programme pour la mise en oeuvre du procédé d'optimisation de déploiement de capteurs selon l'une des revendications 1 à 12 lorsque ce programme est exécuté par les moyens informatiques de traitement d'un système selon la revendication 13.

**16.** Support d'enregistrement lisible par des moyens informatiques de traitement, **caractérisé en ce qu'**il stocke un programme d'ordinateur exécutable par les moyens informatiques pour la mise en oeuvre du procédé selon l'une des revendications 1 à 12.

**Patentansprüche**

**1.** Verfahren zum Optimieren der Platzierung von Sensoren (31, 32, 33) in einer Zone (1) zum Orten von wenigstens einem Ziel in der Zone, wobei jeder Sensor zum Erkennen, auf binäre Weise, der An- oder Abwesenheit jedes Ziels bestimmt ist, das in seinen Erkennungsbereich (310, 320, 330) eindringt,
wobei das Verfahren in einem computergestützte Datenverarbeitungsmittel umfassenden System durch Ausführen wenigstens eines in einem Speicherplatz des Computers enthaltenen Optimierungsalgorithmus durchgeführt wird, wobei das Verfahren einen Optimierungsalgorithmus mit mehreren Zielen nutzt, **dadurch gekennzeichnet ist, dass** es Folgendes beinhaltet:

a) Aufzeichnen, im Speicherplatz des Computers, von digitalen Daten in Bezug auf die Oberflächengeometrie der Platzierungszone,

b) Diskretisieren der Platzierungszone von Sensoren (31, 32, 33) in eine Mehrzahl von potentiellen punktuellen Positionen (P) durch einen von den computergestützten Verarbeitungsmitteln ausgeführten Algorithmus, wobei der Algorithmus wenigstens einen Beabstandungsparameter (d1, d2) zwischen den punktuellen Positionen (P) in einem Speicherplatz des Computers nutzt,

c) Berechnen, durch den von den computergestützten Verarbeitungsmitteln ausgeführten Algorithmus, zum Bestimmen der zu platzierenden Anzahl von Sensoren (31, 32, 33) und der Positionierung jedes zu platzierenden Sensors auf einer punktuellen Position (P) der Platzierungszone (1),

wobei der Optimierungsalgorithmus Anzahl und Positionierung der zu platzierenden Sensoren durch Realisieren von sukzessiven Iterationen des Optimierungsalgorithmus bestimmt, unter Nutzung von:

• wenigstens einer Beschränkung, die die Abdeckung aller punktuellen Positionen der Platzierungszone durch die ein oder mehreren Erkennungsbereiche der ein oder mehreren zu platzierenden Sensoren verlangt,
• Optimierungszielen, die fordern, Folgendes zu minimieren:

- einerseits den Wert, der die Anzahl von in der Platzierungszone zu platzierenden Sensoren repräsentiert, und
- andererseits die Anzahl von punktuellen Positionen (P), die möglicherweise jedem Ziel zugeordnet werden können, das von wenigstens einem Sensor erkannt werden soll.

2. Optimierungsverfahren nach dem vorherigen Anspruch, **dadurch gekennzeichnet, dass** das Verfahren eine Unterteilung der Platzierungszone (1) in wenigstens zwei Subzonen (21, 22, 23, 24) beinhaltet, wobei die Daten in Bezug auf die Oberflächengeometrie jeder Subzone in einem Speicherplatz des Computers aufgezeichnet sind, wobei der von den computergestützten Verarbeitungsmitteln ausgeführte Algorithmus zum Orten wenigstens eines von wenigstens einem Sensor erkannten Ziels (C) in einer Subzone bestimmt wird.

3. Optimierungsverfahren nach Anspruch 2, **dadurch gekennzeichnet, dass** das Ausführen des Optimierungsalgorithmus durch die computergestützten Verarbeitungsmittel das Berechnen der Anzahl(en) und Positionierung(en) von Sensoren durch Zulassen der Bestimmung der Subzone (21, 22, 23, 24) bestimmt, in der sich ein von wenigstens einem platzierten Sensor erkanntes Ziel (C) befindet.

4. Optimierungsverfahren nach einem der vorherigen Ansprüche, **dadurch gekennzeichnet, dass** der Erkennungsbereich (310, 320, 330) jedes Sensors (31, 32, 33) eine Scheibe ist, deren den Radius repräsentierender Parameter in einem Speicherplatz des Computers aufgezeichnet ist.

5. Optimierungsverfahren nach einem der vorherigen Ansprüche, **dadurch gekennzeichnet, dass** die Tatsache, dass sich alle punktuellen Positionen (P) der Platzierungszone in den ein oder mehreren Erkennungsbereichen der ein oder mehreren zu platzierenden Sensoren befinden, durch eine Abdeckungsbeschränkung gewährleistet wird, integriert in wenigstens einem Optimierungsalgorithmus, der die durch Ausführen des Algorithmus durch die computergestützten Verarbeitungsmittel ausgeführte Formel erfüllt:

$$\frac{1}{|P|}\sum_{i \in P} a_{i,j} \cdot X_i \geq 1, \forall j \in P,$$

$$a_{i,j} \text{ und } X_i \in \{0,1\}, \forall i,j \in P,$$

wobei P ein Parameter ist, der in einem Speicherplatz des Computers gespeichert ist und die Anzahl von potentiellen punktuellen Positionen von Sensoren infolge der Diskretisierung der Platzierungszone repräsentiert, wobei $a_{i,j}$ ein binärer Koeffizient ist, der die Abdeckung der Position j durch einen an Position i platzierten hypothetischen Sensor (31, 32, 33) ausdrückt, und $X_i$ eine binäre Entscheidungsvariable entsprechend der Anwesenheit eines an Position i platzierten Sensors ist, wobei diese beiden unabhängigen Parameter in einem Speicherplatz des Computers gespeichert sind, wobei $a_{i,j}$ und $X_i$ jeweils gleich 1 sind, wenn die Abdeckung der Position j durch einen an Position i platzierten Sensor gewährleistet ist und wenn ein Sensor an Position i vorhanden ist, und $a_{i,j}$ und $X_i$ andernfalls gleich 0 sind.

6. Optimierungsverfahren nach einem der vorherigen Ansprüche, **dadurch gekennzeichnet, dass** die Anzahl von in der Platzierungszone platzierten Sensoren die durch Ausführen des Algorithmus durch die computergestützten Verarbeitungsmittel durchgeführte Formel erfüllt:

$$z_1 = \frac{1}{|P|} \sum_{i \in P} X_i \, ,$$

wobei $z_1$ ein normalisierter Parameter ist, berechnet durch den Optimierungsalgorithmus und gespeichert in einem Speicherplatz des Computers.

7. Optimierungsverfahren nach einem der vorherigen Ansprüche, **dadurch gekennzeichnet, dass** der Wert, der eine einer binären Variablen $Y_{j,k}$ auferlegte Beschränkung repräsentiert, in einem Speicherplatz des Computers gespeichert wird, wobei diese Variable $Y_{j,k}$ einen Konflikt bei der Erkennung eines Ziels repräsentiert, wobei ein Konflikt dadurch definiert ist, dass nicht wenigstens einer der Sensoren einem erkannten Ziel (C) eine von zwei möglichen Positionen zuordnen kann, wobei $Y_{j,k}$ nur dann gleich 1 ist, wenn es keinen Sensor gibt, der die Unterscheidung eines Ziels an Position j von einem Ziel an Position k zulässt, wobei $Y_{j,k}$ andernfalls 0 ist, wobei diese Beschränkung des Wertes von $Y_{j,k}$ in einem Speicherplatz des Computers gespeichert ist und die durch Ausführen des Algorithmus durch die computergestützten Verarbeitungsmittel ausgeführte Formel erfüllen muss:

$$\sum_{i \in P} \left( \left| a_{i,j} - a_{i,k} \right| \cdot X_i \right) + Y_{j,k} \geq 1, \forall j, k \in P^2, j \neq k \, ,$$

wobei $a_{i,k}$ ein binärer Koeffizient ist, der die Abdeckung der Position k durch einen an Position i platzierten hypothetischen Sensor ausdrückt, wobei $a_{i,k}$ gleich 1 ist, wenn die Abdeckung der Position k durch einen an Position i platzierten Sensor gewährleistet ist, und wobei $a_{i,k}$ andernfalls gleich 0 ist.

8. Optimierungsverfahren nach Anspruch 7, **dadurch gekennzeichnet, dass** $Y_{j,k}$ nur dann gleich 1 ist, wenn es keinen Sensor gibt, der eine Unterscheidung eines Ziels an Position j von einem Ziel an Position k zulässt, wobei die Positionen j und k in den unterschiedlichen Subzonen (21, 22, 23, 24) sind, wobei $Y_{j,k}$ andernfalls 0 ist.

9. Optimierungsverfahren nach einem der vorherigen Ansprüche, **dadurch gekennzeichnet, dass** die Anzahl von Konflikten bei der Erkennung von wenigstens einem Ziel die durch Ausführen des Algorithmus durch die computergestützten Verarbeitungsmittel ausgeführte Formel erfüllt:

$$z_2 = \frac{1}{|P|} \sum_{j \in P} \left[ \frac{1}{\pi \cdot R^2} \sum_{k \in P, k \neq j} Y_{j,k} \right],$$

wobei R ein im Speicherplatz des Computers gespeicherter Parameter ist, der den Erkennungsradius (310, 320, 330) eines Sensors (31, 32, 33) repräsentiert, wobei $z_2$ ein normalisierter Parameter ist, berechnet durch den Optimierungsalgorithmus und gespeichert im Speicherplatz des Computers.

10. Optimierungsverfahren nach den Ansprüchen 6 und 9, **dadurch gekennzeichnet, dass** das Berechnen zum Bestimmen der Anzahl von zu platzierenden Sensoren und der Positionierung jedes zu platzierenden Sensors an einer punktuellen Position (P) der Platzierungszone durch Minimieren der Parameter $z_1$ und $z_2$ realisiert wird, durchgeführt durch die den Optimierungsalgorithmus ausführenden computergestützten Datenverarbeitungsmittel, wobei der Algorithmus eine lineare Optimierung zum Gewinnen einer optimalen Pareto-Front mit m Punkten realisiert, wobei m eine natürliche ganze Zahl ist, die im Speicherplatz des Computers gespeichert ist.

11. Optimierungsverfahren nach den Ansprüchen 6 und 9, **dadurch gekennzeichnet, dass** der Optimierungsalgorithmus zwei Optimierungsalgorithmen (M1, M2) umfasst, bestimmt zum Realisieren der Berechnung von $z_1$ und $z_2$, wobei der erste Algorithmus (M1) zum Berechnen der Werte des Parameters $z_2$ bestimmt ist, wobei der zweite Algorithmus (M2) zum Berechnen der Werte des Parameters $z_1$ bestimmt ist.

12. Optimierungsparameter nach den Ansprüchen 6 und 9 oder nach einem der Ansprüche 10 und 11, **dadurch gekennzeichnet, dass** das Verfahren für die Berechnung zum Bestimmen der Anzahl von zu platzierenden Sensoren und der Positionierung jedes zu platzierenden Sensors auf einer punktuellen Position (P) der Platzierungszone (1) durch Ausführen der Optimierungsalgorithmen (M1, M2) durch die computergestützten Verarbeitungsittel durchgeführt wird und Folgendes beinhaltet:

a. Berechnen und Aufzeichnen von extremen Punkten $(z_1^{min}, z_2^{max})$ der Pareto-Front, dadurch realisiert, dass die Optimierungsalgorithmen die folgenden Formeln erfüllen:

$$p_{z1} = (z_1^{\min}, z_2^{\max}) \text{ und } p_{z2} = (z_1^{\max}, z_2^{\min}),$$

wobei $z_1^{min}$ durch Minimieren von $z_1$ ohne Verlust der mit der Minimierung von Konflikten bei der Erkennung von wenigstens einem Ziel verbundenen Beschränkung berechnet wird, wobei $z_2^{min}$ durch Minimieren von $z_2$ ohne Verlust der mit der Minimierung der Anzahl von platzierten Sensoren verbundenen Beschränkungen berechnet wird, wobei $z_2^{max}$ mit der Beschränkung $\frac{1}{|P|}\sum_{i \in P} X_i \leq z_1^{\min}$, berechnet wird, wobei $z_1^{max}$ mit der Beschränkung $\frac{1}{|P|}\sum_{j \in P}\left[\frac{1}{\pi \cdot R^2}\sum_{k \in P, k \neq j} Y_{j,k}\right] \leq z_2^{\min}$ berechnet wird;

b. Berechnen und Aufzeichnen der Parameter $z_2^1$ und $z_1^1$, wobei $z_1^1$ durch den zweiten Algorithmus (M2) unter Beachtung der Beschränkung $\frac{1}{|P|}\sum_{i \in P} X_i < z_1^{\max}$ berechnet wird, wobei $z_2^1$ durch den ersten Algorithmus (M1) unter Beachtung der Beschränkung $\frac{1}{|P|}\sum_{i \in P} X_i \leq z_1^1$ berechnet wird;

c. Wiederholen der Berechnung und des Aufzeichnens aller Parameter der Pareto-Front, deren Koordinaten gemäß der Formel $p_n = (z_1^n, z_2^n)$ identifiziert wurden, wobei $z_2^n$ durch den ersten Algorithmus (M1) unter Beachtung der Beschränkung $\frac{1}{|P|}\sum_{i \in P} X_i < z_1^{n-1}$ berechnet wird, wobei $z_1^n$ durch den zweiten Algorithmus (M2) unter Beachtung der Beschränkung $\frac{1}{|P|}\sum_{j \in P}\left[\frac{1}{\pi \cdot R^2}\sum_{k \in P, k \neq j} Y_{j,k}\right] \leq z_2^n$ berechnet wird, für alle Werte von n zwischen 2 und m, wobei n eine natürliche ganze Zahl ist, die in einem Speicherplatz des Computers gespeichert ist.

13. System zum Optimieren der Platzierung von Sensoren (31, 32, 33) in einer Zone (1) zum Orten von wenigstens einem Ziel in der Zone, wobei jeder Sensor zum Erkennen, auf binäre Weise, jedes Ziels bestimmt ist, das in den Erkennungsbereich (310, 320, 330) eindringt, wobei das System **dadurch gekennzeichnet ist, dass** es computergestützte Mittel zum Verarbeiten von Daten umfasst, die einen Speicherplatz umfassen, in dem Daten gespeichert sind, wobei diese computergestützten Mittel zum Nutzen der Daten zum Ausführen wenigstens eines Optimierungsalgorithmus mit mehreren Zielen ausgelegt ist, definiert durch die Durchführung des Optimierungsverfahrens nach einem der Ansprüche 1 bis 12.

14. Verwenden eines Optimierungssystems nach Anspruch 13 zum Durchführen des Verfahrens nach einem der Ansprüche 1 bis 12.

**15.** Computerprogramm, **dadurch gekennzeichnet, dass** es Programmbefehlscode zum Durchführen des Verfahrens zum Optimieren der Platzierung von Sensoren nach einem der Ansprüche 1 bis 12 umfasst, wenn das Programm von den computergestützten Verarbeitungsmitteln eines Systems nach Anspruch 13 durchgeführt wird.

**16.** Lesbares Aufzeichnungsmedium für computergestützte Verarbeitungsmittel, **dadurch gekennzeichnet, dass** es ein Computerprogramm speichert, das von dem Computer ausgeführt werden kann, um das Verfahren nach einem der Ansprüche 1 bis 12 durchzuführen.

**Claims**

**1.** Method for optimising the deployment of sensors (31, 32, 33) in a zone (1) for the location of at least one target in said zone, each sensor being designed to detect, in binary fashion, the presence or absence of any target penetrating its detection surface (310, 320, 330), the method being employed in a system including data processing computer means, executing at least one optimising algorithm included in a memory space of the computer means, the method using an optimising algorithm with a plurality of objectives, is **characterised in that** it includes:

a) recording, in the memory space of the computer means, of digital data relating to the surface geometry of the deployment zone,
b) discretisation of the zone for deployment of sensors (31, 32, 33) into a plurality of potential discrete positions (P), by an algorithm executed by processing computer means, the algorithm using at least one spacing parameter ($d_1$, $d_2$) between the discrete positions (P) in a memory space of the computer means,
c) calculation, by the algorithm executed by the processing computer means, to determine the number of sensors (31, 32, 33) to be deployed and the positioning of each sensor to be deployed at a discrete position (P) of the deployment zone (1),

said optimising algorithm determining the number and positioning of the sensors to be deployed, by performing successive iterations of the optimising algorithm using:

• at least one constraint requiring cover of all discrete positions of the deployment zone by the detection surface or surfaces of the sensor or sensors to be deployed,
• optimising objectives requiring minimisation of:

- firstly, the value representing the number of sensors to be deployed in the deployment zone, and
- secondly, the number of discrete positions (P) that can possibly be attributed to each target designed to be detected by at least one sensor.

**2.** Optimisation method according to the preceding claim, **characterised in that** the method includes division of the deployment zone (1) into at least two subzones (21, 22, 23, 24), the data relating to the surface geometry of each subzone being recorded in a memory space of the computer means, the algorithm executed by the processing computer means being designed to locate at least one target (C), detected by at least one sensor, in a subzone.

**3.** Optimisation method according to claim 2, **characterised in that** execution of the optimising algorithm by the processing computer means determines said calculation of the number(s) and positioning of the sensors by allowing determination of the subzone (21, 22, 23, 24) in which a target (C), detected by at least one deployed sensor, is situated.

**4.** Optimisation method according to any one of the preceding claims, **characterised in that** the detection surface (310. 320. 330) of each sensor (31, 32, 33) is a disc of which the parameter representing the value of the radius is recorded in a memory space of the computer means.

**5.** Optimisation method according to any one of the preceding claims, **characterised by** the fact that all of the discrete positions (P) of the deployment zone are located in the detection surface or surfaces of the sensor or sensors to be deployed, is ensured by an integrated cover constraint in at least one optimising algorithm satisfying the formula used by execution of the algorithm by the processing computer means:

$$\frac{1}{|P|}\sum_{i\in P}a_{i,j}\cdot X_i \geq 1, \forall j \in P\ ,$$

$$a_{i,j} \text{ et } X_i \in \{0,1\}, \forall i,j \in P\ ,$$

P being a parameter recorded in a memory space of the computer means representing the number of potential discrete positions of sensors resulting from discretisation of the deployment zone, $a_{i,j}$ being a binary coefficient expressing cover of position j by a hypothetical sensor (31, 32, 33) deployed at position i, and $X_i$ being a binary decision variable corresponding to the presence of a sensor deployed at position i, these two independent parameters being recorded in a memory space of the computer means, $a_{i,j}$ and $X_i$ being equal to 1 respectfully if cover of position j by a sensor deployed at position i is ensured and if a sensor is present at position i and $a_{i,j}$ and $X_i$ being equal to 0 otherwise.

6. Optimisation method according to any one of the preceding claims, **characterised in that** the number of sensors deployed in the deployment zone satisfies the formula used by execution of the algorithm by the processing computer means:

$$z_1 = \frac{1}{|P|}\sum_{i\in P}X_i\ ,$$

$z_1$ being a standardised parameter calculated by the optimising algorithm and recorded in a memory space of the computer means.

7. Optimisation method according to any one of the preceding claims, **characterised in that** the value representing a constraint imposed on a binary variable $Y_{j,k}$ is recorded in a memory space of the computer means, this variable $Y_{j,k}$ representing a conflict in the detection of a target, a conflict being defined by the impossibility of attributing a position to a target detected (C) by at least one of the sensors among two possible positions, $Y_{j,k}$ being equal to 1 if and only if there is no sensor making it possible to distinguish a target present at position j from a target present at position k, $Y_{j,k}$ being zero otherwise, this constraint on the value of $Y_{j,k}$ being recorded in a memory space of the computer means and must satisfy the formula employed by execution of the algorithm by the processing computer means:

$$\sum_{i\in P}\left(\left|a_{i,j}-a_{i,k}\right|\cdot X_i\right)+Y_{j,k} \geq 1, \forall j,k \in P^2, j \neq k\ ,$$

$a_{i,k}$ being a binary coefficient expressing cover of position k by a hypothetical sensor deployed at position i, $a_{i,k}$ being equal to 1 if cover of position k by a sensor deployed at position i is ensured, and $a_{i,k}$ being equal to 0 otherwise.

8. Optimisation method according to claim 7, **characterised in that** $Y_{j,k}$ is equal to 1 if and only if there is no sensor making it possible to distinguish a target present at position j from a target present at position k, positions j and k being in different subzones (21, 22, 23, 24), $Y_{j,k}$ being zero otherwise.

9. Optimisation method according to any one of the preceding claims, **characterised in that** the number of conflicts in detection of at least one target satisfies the formula employed by execution of the algorithm by the processing computer means:

$$z_2 = \frac{1}{|P|} \sum_{j \in P} \left[ \frac{1}{\pi \cdot R^2} \sum_{k \in P, k \neq j} Y_{j,k} \right],$$

R being a parameter recorded in a memory space of the computer means and representing the radius of detection (310, 320, 330) of a sensor (31, 32, 33), $z_2$ being a standardised parameter calculated by the optimising algorithm and recorded in a memory space of the computer means.

10. Optimisation method according to claims 6 and 9, **characterised in that** calculation in order to determine the number of sensors to be deployed and the positioning of each sensor to be deployed at a discrete position (P) of the deployment zone is performed by minimisation of the parameters $z_1$ and $z_2$, used by the data processing computer means which execute the optimising algorithm, said algorithm performing linear optimisation in order to obtain an optimal Pareto front at m points, m being a natural number recorded in a memory space of the computer means.

11. Optimisation method according to claims 6 and 9, **characterised in that** the optimising algorithm includes two optimising algorithms (M1, M2) designed to perform the calculations of $z_1$ and $z_2$, the first algorithm (M1) being designed to calculate the values of parameter $z_2$, the second algorithm (M2) being designed to calculate the values of parameter $z_1$.

12. Optimisation method according to claims 6 and 9, or according to one of claims 10 and 11, **characterised in that** said method is employed, for the calculation to determine the number of sensors to be deployed and the positioning of each sensor to be deployed at a discrete position (P) of the deployment zone (1), via execution of the optimising algorithms (M1, M2) by the processing computer means, and includes:

   a. calculation and recording of the extreme points ($z_1^{min}$, $z_2^{min}$) of the Pareto front, performed by the optimising algorithms satisfying the formulae:

$$p_{z1} = (z_1^{min}, z_2^{max}) \quad \text{and} \quad p_{z2} = (z_1^{max}, z_2^{min})$$

$z_1^{min}$ being calculated by minimising $z_1$ without taking into account the constraint linked to minimisation of conflicts in the detection of at least one target, $z_2^{min}$ being calculated by minimising $z_2$ without taking into account the constraint linked to minimisation of the number of sensors deployed, $z_2^{max}$ being calculated with the constraint $\dfrac{1}{|P|} \sum_{i \in P} X_i \leq z_1^{min}$,

$z_1^{max}$ being calculated
with the constraint

$$\frac{1}{|P|} \sum_{j \in P} \left[ \frac{1}{\pi \cdot R^2} \sum_{k \in P, k \neq j} Y_{j,k} \right] \leq z_2^{min}$$

   b. calculation and recording of the parameters $z_2^1$ and $z_1^1$, $z_1^1$ being calculated by the second algorithm (M2) while respecting the constraint

$$\frac{1}{|P|} \sum_{i \in P} X_i < z_1^{max}$$

$z_2^1$ being calculated by the first algorithm (M1) while respecting the constraint

$$\frac{1}{|P|} \sum_{i \in P} X_i \leq z_1^1 \; ;$$

c. iteration of the calculation and recording of all parameters of the Pareto front of which the coordinates are identified according to the formula $p_n = \left( z_1^n, z_2^n \right)$, $z_2^n$ being calculated by the first algorithm (M1) while respecting the constraint $\frac{1}{|P|} \sum_{i \in P} X_i < z_1^{n-1}$, $z_1^n$ being calculated by the second algorithm (M2) while respecting the constraint $\frac{1}{|P|} \sum_{j \in P} \left[ \frac{1}{\pi \cdot R^2} \sum_{k \in P, k \neq j} Y_{j,k} \right] \leq z_2^n$ for all values of n between 2 and m, n being a natural number recorded in a memory space of the computer means.

13. System for optimising the deployment of sensors (31, 32, 33) in a zone (1) for the location of at least one target in said zone, in which each sensor is designed to detect in binary fashion any target penetrating its detection surface (310, 320, 330), the system being **characterised in that** it includes data processing computer means including a memory space in which are recorded data, these computer means being adapted to use said data to execute at least one optimising algorithm with a plurality of objectives and defined by employment of the optimisation method according to one of claims 1 to 12.

14. Use of an optimisation system according to claim 13 for employment of the method according to one of claims 1 to 12.

15. Computer program **characterised in that** it includes program code instructions for employment of the method for optimising deployment of sensors according to one of claims 1 to 12 when this program is executed by processing computer means of a system according to claim 13.

16. Recording medium which can be read by processing computer means, **characterised in that** it stores a computer program that can be executed by the computer means for employment of the method according to one of claims 1 to 12.

21

1

24

22

23

FIGURE 1a

21

d1

d2

22

24

23

P

FIGURE 1b

FIGURE 2

FIGURE 3a

FIGURE 3b

FIGURE 4

**EP 3 311 604 B1**

## RÉFÉRENCES CITÉES DANS LA DESCRIPTION

**Documents brevets cités dans la description**

- WO 2010119230 A
- US 20130218499 A